# FASCICULE DE BREVET EUROPEEN

(11) **EP 2 516 146 B1**
(45) Date de publication et mention de la délivrance du brevet: **04.06.2014**
(21) Numéro de dépôt: 10790750.3
(22) Date de dépôt: 07.12.2010
(51) Int. Cl.: B29D 30/46

(54) **PROCÉDÉ ET DISPOSITIF DE MESURE DE L'ANGLE DE NAPPE AVANT COUPE**
VERFAHREN UND VORRICHTUNG ZUR MESSUNG DES LAGENWINKELS VOR EINEM SCHNEIDVORGANG
METHOD AND DEVICE FOR MEASURING THE PLY ANGLE PRIOR TO CUTTING

(30) Priorité: 24.12.2009 FR 0959565
(43) Date de publication de la demande: 31.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: RAVAT, Stéphane, F-63122 Saint-Genès-Champanelle (FR); DUCROS, Thierry, F-63122 Ceyrat (FR); DUBOIS, Clément, F-63000 Clermont-Ferrand (FR)
(74) Mandataire: Reynaud, Georges
(86) Numéro de dépôt international: PCT/EP2010/069075
(87) Numéro de publication internationale: WO 2011/076558

(56) Documents cités:
- EP-A2- 0 447 273
- JP-A- 3 251 440
- JP-A- 2004 082 392
- US-A- 4 857 123

## Description

L'invention concerne le domaine de la fabrication des pneumatiques, et plus particulièrement le domaine du traitement et de la coupe des nappes de renfort en amont du processus d'assemblage.

Ces nappes de renfort se présentent sous la forme d'un ensemble de tronçons de fils, de longueur donnée, enrobés dans un mélange de caoutchouc, disposés parallèlement entre eux et faisant un angle donné avec la direction longitudinale de la nappe.

Lors de l'opération d'assemblage il est nécessaire de découper des tronçons de nappe dont la longueur est ajustée à la circonférence de la forme destinée à recevoir ce composant. Aussi, en amont de la machine d'assemblage, on dispose d'un moyen de coupe apte à séparer un tronçon de nappe de la bande de nappe continue, en sectionnant le pont de gomme situé entre deux fils adjacents.

En règle générale, ce moyen de coupe se déplace le long d'un support rectiligne dont l'orientation correspond à l'angle théorique formé par les fils avec la direction longitudinale.

Il s'avère toutefois, que l'angle réel des fils avec la direction longitudinale diffère d'un ou deux degrés d'angle de l'angle théorique que l'on a cherché à obtenir lors de la réalisation de la nappe.

Il s'en suit que le moyen de coupe qui pénètre dans l'espace entre deux fil et qui suit une trajectoire correspondant à l'angle théorique, vient buter transversalement contre les fils, et provoque des déformations ou des dégradations de la nappe.

Aussi, il a été développé des couteaux dits flottants, supportés par un cadre articulé et aptes à se déplacer librement selon une direction perpendiculaire à la direction du support. Les fils adjacent à la ligne de coupe servent alors à guider le couteau transversalement à sa direction de déplacement. Ce dispositif est décrit à titre d'exemple dans la publication US 4 857 123.

De manière alternative, il a été décrit dans la publication JP 3 251 440 un dispositif comprenant une unité de mesure formée de moyen magnétiques pour piloter la déviation transversale du couteau mais ce moyen ne s'adapte qu'aux nappes formées de fil de renfort métalliques.

La publication JP 2004082392 - A révèle un procédé et un dispositif pour le coupage d'une bande de renforcement pour pneumatiques, la bande comprenant des fils de renforcement parallèles enrobés dans un mélange de caoutchouc. Le dispositif comprend des moyens pour détecter la position des fils de renforcement.

La publication EP 0447273 - A révèle un procédé et un dispositif pour le coupage d'une bande de renforcement pour pneumatiques et pour son enroulage autour d'un tambour de confection de pneumatiques. Le procédé de coupage comprend une étape de marquage d'une première et d'une deuxième ligne de coupage pour définir le bord antérieur et le bord arrière de la bande coupée.

Toutefois, lorsque l'on cherche à découper des nappes comportant des fils de faible diamètre et de faible rigidité, on observe que les fils ne font plus leur office de guide en raison de leur faible tenue mécanique. En effet, pour que le dispositif connu de l'art antérieur fonctionne correctement, il est nécessaire que les fils puissent supporter l'effort transversal nécessaire pour engendrer le mouvement transversal du moyen de coupe. Et on observe que cet effort est d'autant plus important que l'on exerce une forcé sur le couteau pour qu'il soit à même de produire l'effet attendu à savoir, de découper la nappe. Ce phénomène est particulièrement sensible lorsque le moyen de coupe sectionne les deux extrémités transversales de la nappe, et il n'est pas rare d'observer des soulèvements ou des replis de la nappe dans cette zone.

L'invention a pour objet de proposer une solution à ce problème.

Le dispositif de coupe d'une nappe de renfort selon l'invention comme défini dans la revendication 1, se caractérise en ce qu'il comprend un premier moyen apte, sans procéder à la découpe de ladite nappe, à estimer l'angle réel des fils avec la direction longitudinale, et un second moyen apte à couper la nappe selon l'angle estimé par le premier moyen.

Le procédé selon l'invention comme défini dans la revendication 13, tire partie des fonctionnalités du dispositif ci-dessus et comprend les étapes suivantes au cours desquelles :
- on déroule ladite nappe sous le premier moyen,
- on détermine l'angle réel des fils avec la direction longitudinale à l'aide du premier moyen,
- on oriente le deuxième moyen en fonction de l'angle réel estimé par le premier moyen et
- on découpe un tronçon de nappe.

Il est alors possible de découper la nappe en minimisant les efforts transversaux exercés par les fils sur la roulette de coupe. Aussi, l'invention a également pour objet de proposer des alternatives de réalisation dudit premier moyen permettant d'effectuer la mesurer de l'angle réel en induisant le minimum de déformation de la nappe. Des formes préférentielles de l'invention sont définies dans les revendications dépendantes.

La description qui suit s'appuie sur les figures 1 à 9 dans lesquelles :
- la figure 1 représente une vue générale d'un moyen d'assemblage comprenant un dispositif de coupe selon l'invention,
- la figure 2 représente une vue générale en perspective d'un dispositif de coupe selon l'invention,
- la figure 3 représente une vue en perspective d'un premier moyen selon un premier mode de réalisation,
- la figure 4 représente une vue détaillée du mode d'application du premier moyen sur la nappe de renfort,
- la figure 5 représente une vue en perspective du second moyen selon ledit premier mode de réalisation,
- les figures 6 et 7 représentent des vues en perspective du premier moyen selon un deuxième mode de réalisation de l'invention,
- les figures 8 et 9 représentent des vues de dessus d'un mode particulier de montage dudit second mode de réalisation de l'invention.

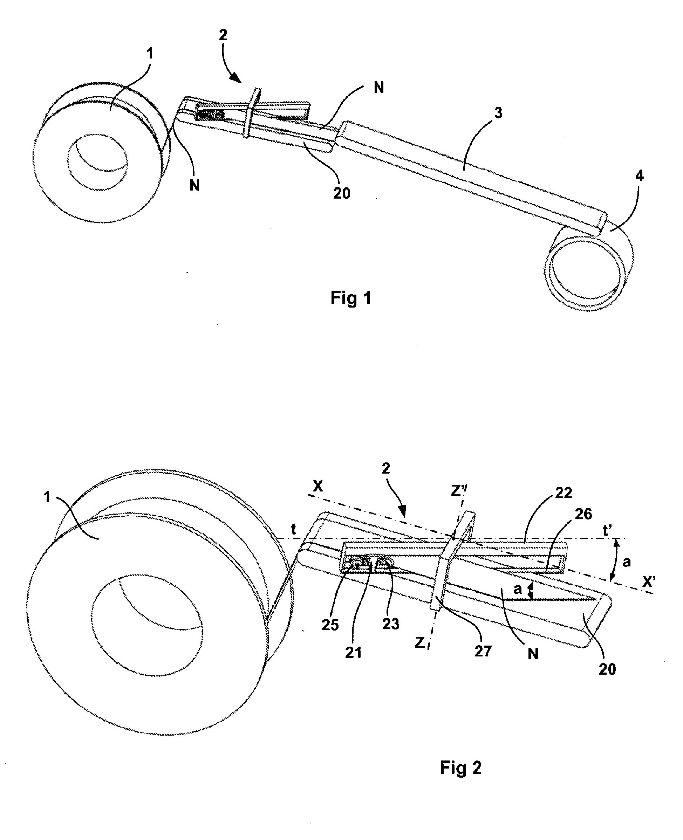

Le moyen d'assemblage décrit à la figure 1 comprend une bobine d'alimentation 1, dans laquelle est stockée une bande continue de nappe de renfort N. Cette nappe est déroulée sur un dispositif de coupe 2 selon l'invention, au niveau duquel la bande continue est découpée en tronçons d'une longueur donnée. Ce dispositif de coupe comprend un tapis de transfert 20 sur lequel circule ladite nappe N en direction d'un tapis de stockage ou de transfert 3, sur lequel le tronçon de nappe est évacué en attente de la pose dudit tronçon sur un tambour d'assemblage 4. Le plan du tapis de transfert sur lequel repose la nappe, généralement disposé horizontalement, constitue le plan de référence du dispositif de coupe 2.

Le dispositif de coupe comprend, en référence à la figure 2, un bâti 27 supportant un rail rectiligne 22. Le rail pivote autour d'un axe parallèle à la direction ZZ' perpendiculaire au plan du tapis 20 sur lequel repose la nappe N.

Les fils de la nappe font un angle théorique a avec la direction longitudinale de la nappe et du tapis XX'. Pour la bonne conduite du procédé, on s'arrange bien évidemment pour que la direction longitudinale de la nappe et de la bande continue corresponde très exactement avec la direction longitudinale XX' du dispositif de coupe. Des moyens (non représentés) permettent d'orienter la direction tt' du rail 22 selon un angle sensiblement égal à l'angle des fils par rapport à la direction longitudinale XX'.

Un support mobile 21 circule le long du rail 22, et supporte le premier moyen 23 et le second moyen 25. Le second moyen 25 peut comprendre une roulette de coupe qui s'appuie sur une enclume 26.

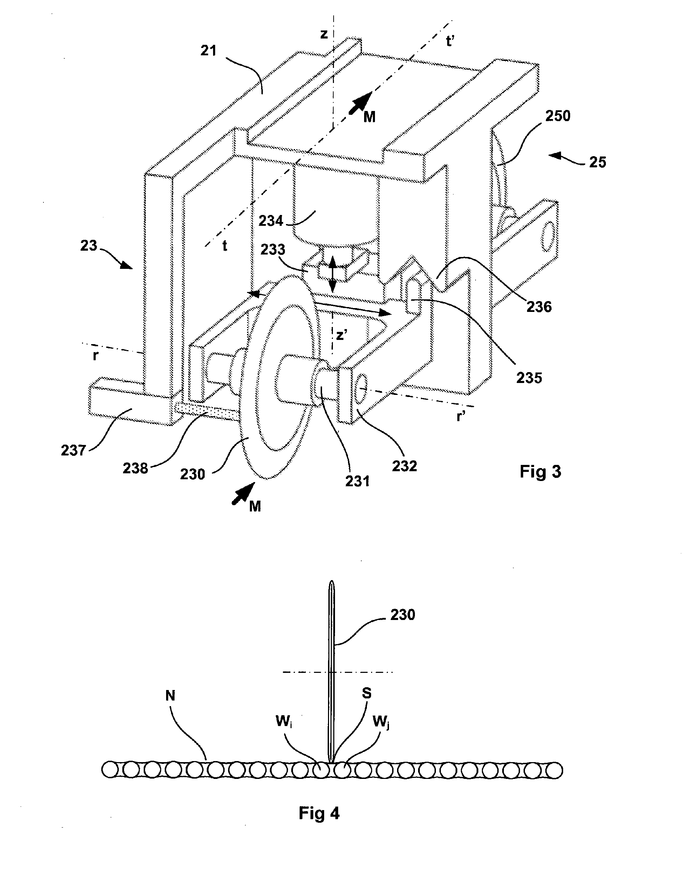

La figure 2 représente un premier exemple de réalisation du premier moyen 23, qui comprend une roulette de mesure 230, apte à suivre le sillon S formé par l'espace entre deux fils de renfort juxtaposés entre eux, lorsque le support 21 se déplace le long dudit rail 22 comme cela est illustré la figure 3,

La roulette de mesure 230 est libre en rotation autour d'un axe 231, dont l'orientation rr' est sensiblement perpendiculaire au plan formé par la direction tt' du rail 22 et par la direction ZZ' perpendiculaire au plan de la nappe N et du tapis 20.

L'axe 231 de la roulette 230 est relié au support mobile 21 par l'intermédiaire d'un cadre rigide 232. Ce cadre est apte à se déplacer librement selon une direction parallèle à la direction rr' dudit axe 231. A cet effet, le cadre 232 circule librement dans une glissière 233.

La glissière 233 est elle même animée d'un mouvement de monte et baisse dans la direction ZZ' par un vérin 234. Ce mouvement permet de mettre la roulette en léger appui sur la surface de la nappe, de sorte que la roulette puisse circuler dans le sillon S sans rompre le pont de gomme formé entre les deux fils Wᵢ et Wⱼ tels qu'illustrés à la figure 4, et sans déformer l'angle des fils.

Pour atteindre ce résultat, la première force d'application F₁ de la roulette sur la nappe N peut utilement être comprise entre 1 daN et 5 daN. Ces limites sont issues de l'expérience acquise, au cours de laquelle il a été constaté que :
- lorsque la force d'application est trop élevée, la roulette de mesure est susceptible d'entamer le pont de gomme et de modifier l'orientation réelle des fils,
- lorsque la force d'application est trop faible, la roulette de mesure peut sortir du sillon S.

De manière connue, et de manière à éviter des trajectoires divergentes de la roulette de mesure 230, on s'arrange pour effectuer la mesure en faisant circuler le support 21 dans le sens permettant de mettre en traction les pièces formant l'assemblage soumis à la réaction de la roulette dans la direction tt'. Ce sens de circulation est repéré par la flèche M.

De la sorte, lorsque le support 21 se déplace le long du rail 22, les efforts transversaux générés par les bords du sillon S, et que l'on cherche à rendre les plus faibles possibles, sont transmis par la roulette 230, et engendrent le déplacement du cadre rigide 232 dans la glissière 233 le long de la direction rr'.

Des moyens (non représentés), de type codeur à impulsion, permettent de mesurer le déplacement du support 21 le long du rail 22.

De même, des moyens sont prévus pour mesurer le déplacement de la roulette le long de la direction parallèle à la direction rr' de l'axe 231. A titre indicatif ces moyens peuvent être formés par un rayon laser 238 orienté dans la direction sensiblement perpendiculaire au plan de la roulette 230, et par une base émettrice/réceptrice de télémétrie 237.

Un guide 236, monté sur le support 21, collaborant avec un téton 235 monté sur le cadre rigide 235, peut utilement être ajouté au premier moyen de mesure de manière à recentrer la roulette 230 par rapport au support lorsque l'on relève la glissière 233 supportant le cadre 232 en fin de cycle de mesure.

On observera que le premier moyen peut être mis en oeuvre à l'aide de moyens fort différents de celui faisant l'objet de la présente description. A titre informatif, des résultats équivalents peuvent être obtenus à l'aide d'un palpeur montés sur un support, en remplacement de la roulette, ou encore à l'aide de détecteurs optiques qui, bien que plus onéreux et complexes à mettre en oeuvre, présentent l'avantage de ne pas interagir mécaniquement avec les fils de la nappe.

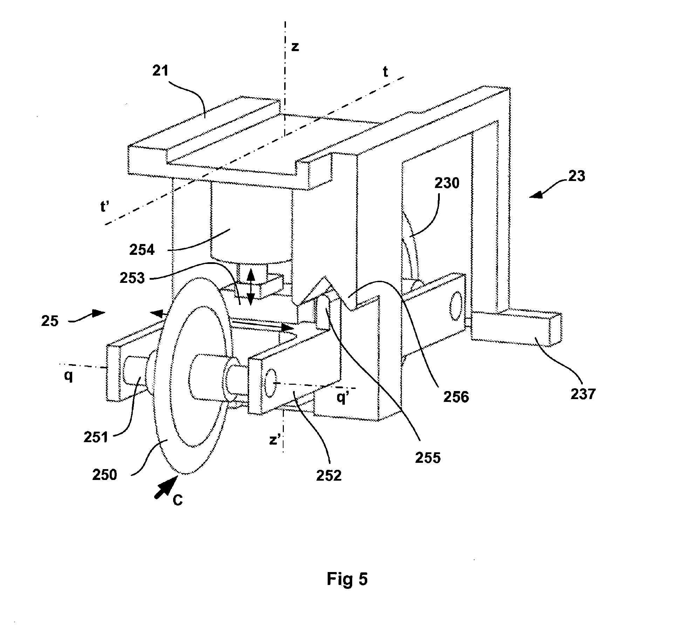

Le second moyen 25 de coupe est quand à lui, de facture connue. La figure 5 permet d'en illustrer les principales composantes.

Selon le mode de réalisation représenté, ce second moyen comprend une roulette de coupe 250 montée sur un axe 251 dont la direction qq' est perpendiculaire au plan formé par la direction tt' du rail 22 et par la direction ZZ' perpendiculaire au plan de la nappe N. L'axe 251 est relié au support 21 par un cadre rigide 252.

De manière préférentielle ce cadre rigide 252 peut être lui même monté dans une glissière 253 de sorte que le cadre 252 puisse circuler librement le long d'une direction parallèle à la direction qq' de l'axe 251.

Des moyens de recentrage 255 et 256, identiques à ceux décrits précédemment sont également prévus.

La glissière 253 est animée selon un mouvement de monte et baisse dans la direction ZZ' par un vérin 254. Ce vérin permet d'appliquer la roulette de coupe 250 sur la nappe N, qui repose sur l'enclume 26, avec une force F₂ dont l'amplitude peut utilement être comprise entre 50 daN et 90 daN. Pour améliorer l'efficacité de la coupe, il est possible de porter la roulette de coupe 250 à une température régulée de l'ordre de 140°C.

De manière identique à ce qui a été évoqué précédemment, et toujours dans le but d'éviter des trajectoires divergentes de la roulette de coupe 250, on s'arrange pour effectuer la mesure en faisant circuler le support 21 dans le sens permettant de mettre en traction les pièces formant l'assemblage soumis à la réaction de la roulette de coupe 250 dans la direction tt'. Ce sens de circulation est repéré par la flèche C.

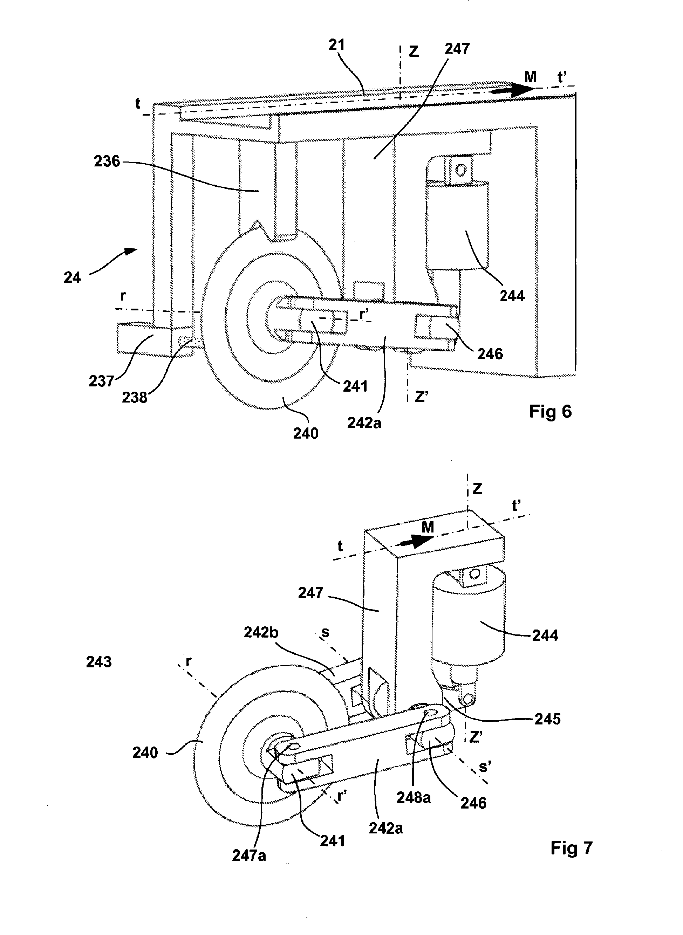

Les figures 5 à 9 permettent de décrire un second mode de réalisation du premier moyen de mesure.

Selon ce second mode de réalisation, le premier moyen comprend une roulette de mesure 240 tournant librement sur un axe 241 dont l'orientation rr' est sensiblement perpendiculaire au plan formé par la direction tt' du support 21 et par la direction ZZ' perpendiculaire au plan de la nappe N et du tapis 20.

L'axe 241 de la roulette de mesure 240 est relié au support 21 par un cadre articulé comprenant deux biellettes 242a et 242b reliées par des articulations, 247a, 247b, 248a, 248b, chacune aux deux extrémités d'un axe 246 solidaire du support 247 dont la direction ss' est parallèle à la direction rr' de l'axe 241 d'une part, et aux deux extrémités de l'axe 241 de la roulette de mesure 240 d'autre part.

Les axes des biellettes, respectivement 247a, 247b, 248a, 248b sont sensiblement parallèles à la direction ZZ', de sorte que le déplacement de la roulette de mesure 240 dans la direction rr' s'accompagne d'un pivotement des biellettes autour des articulations 247a, 247b, 248a, 248b.

La force d'application F₁ de la roulette sur la nappe provient de l'action d'un vérin 244 sur un bras 245 fixé à l'axe 246.

Lorsque les biellettes 242a et 242b sont parallèles, le plan de la roulette 240 reste perpendiculaire à la direction rr', et sensiblement parallèle à la direction tt' du rail 22.

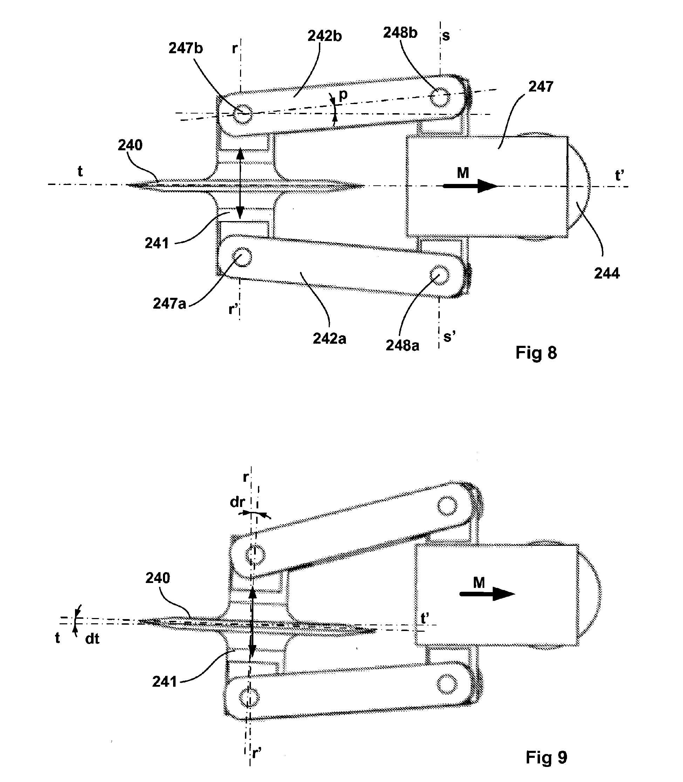

Les figures 8 et 9 illustrent un perfectionnement possible de ce second mode de réalisation du premier moyen. On observe que les biellettes 242a et 242b ne sont pas parallèles entre elles, et sont montées avec un angle de pince p par rapport à la direction tt'.

Il en résulte, que le déplacement de la roulette de mesure 240 dans une direction rr' sensiblement perpendiculaire au plan formé par la direction (tt') du rail 22 et par la direction ZZ' perpendiculaire au plan de la nappe N, fait subir au plan de la roulette de mesure 240 une légère rotation dt par rapport à la direction (tt') du rail 22.

On s'arrange alors pour que l'angle dt corresponde, autant que faire se peut, à la déviation angulaire moyenne da observée sur les nappes couramment traitées à l'aide du dispositif. Cette légère déviation du plan de la roulette de mesure permet de réduire d'autant les agressions de la roulette sur les fils Wᵢ et Wⱼ bordant le sillon de mesure S et d'alléger la force d'applique F₁ générée par le vérin 244.

La mise en oeuvre d'un dispositif selon l'un ou l'autre des modes de réalisation décrits ci-dessus prévoit les étapes suivantes :
- on déroule ladite nappe N sous le premier moyen 2,
- on oriente le rail 22 de telle sorte que la direction tt' du rail 22 fasse un angle avec la direction longitudinale XX' du dispositif correspondant à l'angle théorique a des fils par rapport à la direction longitudinale XX' de la nappe,
- on détermine, par simple calcul trigonométrique l'écart angulaire moyen da entre la direction théorique a des fils et la direction réelle des fils avec la direction longitudinale XX' à l'aide du premier moyen, en faisant circuler la roulette 230, 240 le long d'un sillon S formé par l'espace entre deux fils de renfort juxtaposés entre eux, Wᵢ,, et Wⱼ, et en mesurant le déplacement transversal de la roulette le long de la direction rr' et le déplacement longitudinal du support le long du rail 22,
- on oriente le rail (22) de telle sorte que la direction (tt') du rail (22) fasse un angle correspondant à l'angle réel a+da des fils par rapport à la direction longitudinale de la nappe,
- et on découpe un tronçon de nappe à l'aide du deuxième moyen.

Il serait tout à fait possible d'orienter la direction du rail pendant la coupe de sorte que l'angle de coupe soit précisément l'angle enregistré par la roulette de mesure à chaque niveau de la progression du support 21 le long du rail 22.

Il apparaît toutefois que cette disposition reste lourde à mettre en oeuvre et que les fils ont une orientation généralement rectiligne ne nécessitant pas de tels perfectionnements. Il suffit donc de calculer l'écart angulaire da moyen du fil par rapport à la direction longitudinale pour déterminer une correction angulaire permettant d'obtenir coupe de qualité tout à fait satisfaisante.

La mise en oeuvre du deuxième moyen pour découper la nappe peut se faire directement au niveau du sillon ayant servi de guide à la roulette de mesure. On observera alors que le cycle de mesure et le cycle de coupe s'effectuent consécutivement, alors que la nappe est déroulée simultanément sur le tapis 20 et sur le tapis de lancement 3. Il en résulte que l'on immobilise, pendant ce temps technologique, à la fois le tapis 20 du dispositif de coupe 2 et le tapis de lancement 3.

Il peut alors apparaître judicieux d'effectuer la mesure de l'angle réel en temps différé avant le déroulement de la nappe sur le tapis de lancement 3, en remarquant que les écarts angulaires da ne varient pas de façon brutales entre deux endroits rapprochés de la nappe dans la direction longitudinale.

Auquel cas, la mesure de l'angle à l'aide du premier moyen s'effectue sur la tête de la nappe avant l'engagement de ladite tête sur le tapis de lancement 3, en amont de l'endroit où s'effectue la découpe à l'aide du second moyen. La découpe de la nappe est lancée après avoir déroulé la longueur nécessaire pour réaliser le tronçon de nappe qui occupe alors simultanément le tapis 20 et le tapis de transfert 3. Cette phase d'alimentation est alors allégée du temps technologique nécessaire à l'évaluation de l'angle réel à l'aide du premier moyen.

Dans les exemples de mise en oeuvre de l'invention faisant l'objet de la présente description, les premier et deuxième moyens sont montés sur le même support 21 et circulent sur le même rail 22. Mais il est également possible de mettre en oeuvre l'invention en utilisant des moyens séparés montés sur des rails et des supports séparés.

De même, on observera que les caractéristiques du premier et du deuxième moyen peuvent être très proches l'une de l'autre. Aussi il est tout à fait possible de mettre en oeuvre l'invention en utilisant la même roulette pour effectuer successivement la mesure et la coupe.

On s'arrangera alors pour que le vérin d'applique soit apte à appliquer la roulette sur la nappe en exerçant successivement une première force d'applique F₁ et une deuxième force d'applique F₂ de valeurs différentes, lorsque la roulette est successivement en position de mesure puis en position de découpe. Dans ce cas, on prendra la précaution de réduire la température de chauffage de la roulette, de manière à ne pas dégrader le pont de gomme formant le sillon S de mesure.

## Revendications

1. Dispositif de coupe (2) d'une nappe de renfort (N) formée d'un ensemble de tronçons de fils, de longueur donnée, enrobés dans un mélange de caoutchouc, disposés parallèlement entre eux et faisant un angle théorique donné (a) avec la direction longitudinale de la nappe **caractérisé en ce qu'**il comprend
- un premier moyen (23, 24) apte, sans procéder à la découpe de ladite nappe (N), à estimer l'angle réel (a+da) des fils avec la direction longitudinale (XX') du dispositif, comprenant une roulette de mesure (230, 240), montée sur un support mobile (21) circulant sur un rail (22) rectiligne (22) dont la direction (tt') est orientable selon un angle donné avec la direction longitudinale (XX') du dispositif (2), et apte à suivre le sillon (S) formé par l'espace entre deux fils de renfort juxtaposés (Wᵢ, Wⱼ) entre eux lorsque le support (21) se déplace le long dudit rail (22), et dont l'axe (231), orienté sensiblement dans une direction (rr') perpendiculaire à un plan formé par la direction (tt') du rail (22) et par la direction (ZZ') perpendiculaire au plan de la nappe (N), est libre de déplacement dans ladite direction (rr'), et
- un second moyen (25) apte à couper la nappe (N) selon l'angle réel (a+da) estimé par le premier moyen (23, 24).

2. Dispositif selon la revendication 1, dans lequel le premier moyen (23, 24) comprend des moyens d'applique (234, 244) aptes, lorsque le dispositif est en fonctionnement, à appliquer ladite roulette (230, 240) de mesure sur la surface de ladite nappe (N) avec une première force d'application (F₁)

3. Dispositif selon la revendication 1 ou 2 dans lequel le premier moyen comprend également
- des moyens d'appréciation de la distance parcourue par le support 21 de ladite roulette le long du rail (22),
- des moyens d'appréciation (237, 238) du déplacement de ladite roulette dans la direction parallèle à la direction (rr'),
- des moyens de calculs aptes à déterminer l'angle réel moyen (a +da) des fils avec la direction longitudinale (XX').

4. Dispositif selon la revendication 2 ou 3, dans lequel les moyens d'applique (234, 254) sont aptes à exercer une première force d'application F₁ de la roulette de mesure (230, 250) sur la nappe comprise entre 1 daN et 5 daN.

5. Dispositif selon l'une des revendications 1 à 4, dans lequel l'axe (231) de la roulette de mesure (230) est relié au support mobile (21) par l'intermédiaire d'un cadre rigide (232) apte à se déplacer librement selon une direction parallèle à la direction (rr') de l'axe (231) de la roulette de mesure (230).

6. Dispositif selon l'une des revendications 1 à 4, dans lequel l'axe (241) de la roulette de mesure (240) est relié au support (21) par l'intermédiaire d'un cadre articulé comprenant deux biellettes (242a et 242b) reliées par des articulations (247a, 247b, 248a, 248b) chacune aux deux extrémités d'un axe (246) solidaire du support (21, 247) dont la direction (ss') est parallèle à la direction (rr') de l'axe (241) de la roulette de mesure d'une part, et aux deux extrémités de l'axe (241) de la roulette de mesure (240) d'autre part.

7. Dispositif selon la revendication 6, dans lequel les deux biellettes (242a et 242b) sont montées avec un pincement d'angle (p) par rapport à la direction (tt') du rail (22), de sorte que le déplacement de la roulette de mesure (240) dans une direction perpendiculaire au plan formé par la direction (tt') du rail (22) et par la direction ZZ' perpendiculaire au plan de la nappe (N), fait subir au plan de la roulette de mesure (240) une rotation dt par rapport à la direction (tt') du rail (22).

8. Dispositif selon l'une des revendications 1 à 7, dans lequel le second moyen (25) comprend :
- un rail (22) rectiligne orientable selon un angle donné avec la direction longitudinale (XX') du dispositif,
- une roulette de coupe (250), montée sur un support mobile (21) circulant sur le rail (22), dont l'axe (qq') est orienté sensiblement dans une direction perpendiculaire au plan formé par la direction (tt') du rail (22) et par la direction (ZZ') perpendiculaire au plan de la nappe (N), et apte à sectionner le pont de gomme séparant deux tronçons de fil juxtaposés entre eux,
- des moyens d'applique (254) aptes, lorsque le dispositif est en fonctionnement, à appliquer ladite roulette de coupe (250) sur la surface de ladite nappe (N) avec une deuxième force d'application (F₂),

9. Dispositif selon la revendication 8, dans lequel l'axe (251) de la roulette de coupe (250) est également libre de déplacement dans la direction (rr') perpendiculaire au plan formé par la direction (tt') du rail (22) et par la direction (ZZ') perpendiculaire au plan de la nappe (N).

10. Dispositif selon la revendication 8 ou 9, dans lequel des moyens d'applique (254) sont aptes à appliquer ladite roulette de coupe (250) sur la surface de ladite nappe (N) avec une deuxième force d'application (F₂) comprise entre 50 daN et 90 daN.

11. Dispositif selon l'une des revendications 1 à 10, dans lequel le premier moyen (23, 24) et le second moyen (25) sont disposés sur le même support (21) circulant sur un même rail (22).

12. Dispositif selon la revendication 11, dans lequel la roulette de mesure et la roulette de coupe sont confondues, et dans lequel les moyens d'applique sont aptes à appliquer ladite roulette sur la surface de la nappe successivement avec une première force d'applique (F₁) et une deuxième force d'applique (F₂).

13. Procédé de coupe d'une nappe de renfort (N) formée d'un ensemble de tronçons de fils, de longueur donnée, enrobés dans un mélange de caoutchouc, disposés parallèlement entre eux et faisant un angle donné (a) avec la direction longitudinale de la nappe (N) à l'aide d'un dispositif selon l'une des revendications 11 ou 12 comprenant les étapes suivantes au cours desquelles:
- on déroule ladite nappe sous le premier moyen (23, 24),
- on oriente le rail supportant le premier moyen (22) de telle sorte que la direction (tt') du rail (22) fasse un angle avec la direction longitudinale (XX') du dispositif correspondant à l'angle théorique (a) des fils par rapport à la direction longitudinale (XX') de la nappe (N),
- on détermine l'écart angulaire moyen (da) entre la direction théorique (a) des fils et la direction réelle des fils avec la direction longitudinale à l'aide du premier moyen (23, 24) en faisant circuler la roulette de mesure (230, 240) le long d'un sillon (S) formé par l'espace entre deux fils de renfort (Wᵢ, Wⱼ) juxtaposés entre eux
- on oriente le rail supportant le deuxième moyen (22) de telle sorte que la direction (tt') du rail (22) fasse un angle avec la direction longitudinale (XX') du dispositif correspondant à l'angle réel (a+da) des fils par rapport à la direction longitudinale de la nappe
- on découpe un tronçon de nappe à l'aide de la roulette de coupe (250) du deuxième moyen (25).

14. Procédé selon la revendication 13, dans lequel on découpe la nappe (N) à l'aide du second moyen (25) au niveau du sillon (S) ayant servi de guide à la roulette de mesure (230, 240) pour effectuer l'évaluation de l'écart angulaire (da) à l'aide du premier moyen (23, 24).

15. Procédé selon la revendication 13, dans lequel on découpe la nappe (N) à l'aide du second moyen (25) en aval, dans le sens du déroulement de la nappe, du sillon (S) ayant servi pour effectuer la mesure de l'écart angulaire (da) à l'aide du premier moyen (23, 24).

## Patentansprüche

1. Vorrichtung zum Schneiden (2) einer Verstärkungslage (N), die von einer Einheit von Fadenabschnitten gegebener Länge, eingehüllt in eine Kautschukmischung, parallel zueinander angeordnet und einen gegebenen theoretischen Winkel (a) mit der Längsrichtung der Lage formend gebildet wird, **dadurch gekennzeichnet, dass** sie enthält
- eine erste Einrichtung (23, 24), die, ohne das Schneiden der Lage (N) durchzuführen, den reellen Winkel (a+da) der Fäden mit der Längsrichtung (XX') der Vorrichtung schätzen kann, die ein Messrädchen (230, 240) enthält, das auf einen beweglichen Träger (21) montiert ist, der auf einer geradlinigen Schiene (22) umläuft, deren Richtung (tt') gemäß einem gegebenen Winkel mit der Längsrichtung (XX') der Vorrichtung (2) ausrichtbar ist, und das der von dem Raum zwischen zwei nebeneinander angeordneten Verstärkungsfäden (Wᵢ, Wⱼ) geformten Rille (S) folgen kann, wenn der Träger (21) sich entlang der Schiene (22) verschiebt, und dessen Achse (231), die im Wesentlichen in einer Richtung (rr') lotrecht zu einer von der Richtung (tt') der Schiene (22) und von der Richtung (ZZ') lotrecht zur Ebene der Lage (N) geformten Ebene ausgerichtet ist, sich frei in der Richtung (rr') verschieben kann, und
- eine zweite Einrichtung (25), die die Lage (N) gemäß dem von der ersten Einrichtung (23, 24) geschätzten reellen Winkel (a+da) schneiden kann.

2. Vorrichtung nach Anspruch 1, wobei die erste Einrichtung (23, 24) Andrückeinrichtungen (234, 244) enthält, die, wenn die Vorrichtung in Betrieb ist, das Messrädchen (230, 240) mit einer ersten Andrückkraft (F₁) auf die Fläche der Lage (N) drücken können.

3. Vorrichtung nach Anspruch 1 oder 2, wobei die erste Einrichtung ebenfalls enthält
- Schätzeinrichtungen der vom Träger (21) des Rädchens entlang der Schiene (22) zurückgelegten Strecke,
- Schätzeinrichtungen (237, 238) der Verschiebung des Rädchens in der Richtung parallel zur Richtung (rr'),
- Recheneinrichtungen, die den mittleren reellen Winkel (a+da) der Fäden mit der Längsrichtung (XX') bestimmen können.

4. Vorrichtung nach Anspruch 2 oder 3, wobei die Andrückeinrichtungen (234, 254) eine erste Andrückkraft F₁ des Messrädchens (230, 250) auf die Lage zwischen 1 daN und 5 daN ausüben können.

5. Vorrichtung nach einem der Ansprüche 1 bis 4, wobei die Achse (231) des Messrädchens (230) mit dem beweglichen Träger (21) mittels eines steifen Rahmens (232) verbunden ist, der sich frei in einer Richtung parallel zur Richtung (rr') der Achse (231) des Messrädchens (230) verschieben kann.

6. Vorrichtung nach einem der Ansprüche 1 bis 4, wobei die Achse (241) des Messrädchens (240) mit dem Träger (21) mittels eines gelenkigen Rahmens verbunden ist, der zwei Schubstangen (242a und 242b) enthält, die über Gelenke (247a, 247b, 248a, 248b) je einerseits mit den zwei Enden einer fest mit dem Träger (21, 247) verbundenen Achse (246), deren Richtung (ss') parallel zur Richtung (rr') der Achse (241) des Messrädchens ist, und andererseits mit den zwei Enden der Achse (241) des Messrädchens (240) verbunden sind.

7. Vorrichtung nach Anspruch 6, wobei die zwei Schubstangen (242a und 242b) mit einer Vorspur eines Winkels (p) bezüglich der Richtung (tt') der Schiene (22) montiert sind, so dass die Verschiebung des Messrädchens (240) in einer Richtung lotrecht zur von der Richtung (tt') der Schiene (22) und von der Richtung ZZ' lotrecht zur Ebene der Lage (N) geformten Ebene die Ebene des Messrädchens (240) einer Drehung dt bezüglich der Richtung (tt') der Schiene (22) unterzieht.

8. Vorrichtung nach einem der Ansprüche 1 bis 7, wobei die zweite Einrichtung (25) enthält:
- eine geradlinige Schiene (22), die gemäß einem gegebenen Winkel mit der Längsrichtung (XX') der Vorrichtung ausrichtbar ist,
- ein Schneidrädchen (250), das auf einen auf der Schiene (22) umlaufenden beweglichen Träger (21) montiert ist, dessen Achse (qq') im Wesentlichen in einer Richtung lotrecht zur von der Richtung (tt') der Schiene (22) und von der Richtung (ZZ') lotrecht zur Ebene der Lage (N) geformten Ebene ausgerichtet ist, und das fähig ist, die zwei aneinandergrenzende Fadenabschnitte trennende Gummibrücke durchzuschneiden,
- Andrückeinrichtungen (254), die wenn die Vorrichtung in Betrieb ist, das Schneidrädchen (250) mit einer zweiten Andrückkraft (F₂) auf die Fläche der Lage (N) drücken können.

9. Vorrichtung nach Anspruch 8, wobei die Achse (251) des Schneidrädchens (250) ebenfalls in der Richtung (rr') lotrecht zur von der Richtung (tt') der Schiene (22) und von der Richtung (ZZ') lotrecht zur Ebene der Lage (N) geformten Ebene frei verschoben werden kann.

10. Vorrichtung nach Anspruch 8 oder 9, wobei Andrückeinrichtungen (254) das Schneidrädchen (250) mit einer zweiten Andrückkraft (F₂) auf die Fläche der Lage (N) drücken können, die zwischen 50 daN und 90 daN liegt.

11. Vorrichtung nach einem der Ansprüche 1 bis 10, wobei die erste Einrichtung (23, 24) und die zweite Einrichtung (25) auf dem gleichen Träger (21) angeordnet sind, der auf einer gleichen Schiene (22) umläuft.

12. Vorrichtung nach Anspruch 11, wobei das Messrädchen und das Schneidrädchen zusammenfallen, und wobei die Andrückeinrichtungen das Rädchen nacheinander mit einer ersten Andrückkraft (F₁) und mit einer zweiten Andrückkraft (F₂) auf die Fläche der Lage drücken können.

13. Verfahren zum Schneiden einer Verstärkungslage (N), die von einer Einheit von Fadenabschnitten gegebener Länge, von einer Kautschukmischung umhüllt, parallel zueinander angeordnet und einen gegebenen Winkel (a) mit der Längsrichtung der Lage (N) formend gebildet wird, mit Hilfe einer Vorrichtung nach einem der Ansprüche 11 oder 12, das die folgenden Schritte enthält, während denen:
- die Lage unter der ersten Einrichtung (23, 24) abgewickelt wird,
- die die erste Einrichtung (22) tragende Schiene so ausgerichtet wird, dass die Richtung (tt') der Schiene (22) einen Winkel mit der Längsrichtung (XX') der Vorrichtung entsprechend dem theoretischen Winkel (a) der Fäden bezüglich der Längsrichtung (XX') der Lage (N) bildet,
- die mittlere Winkelabweichung (da) zwischen der theoretischen Richtung (a) der Fäden und der reellen Richtung der Fäden mit der Längsrichtung mit Hilfe der ersten Einrichtung (23, 24) bestimmt wird, indem das Messrädchen (230, 240) entlang einer Rille (S) umlaufen gelassen wird, die vom Zwischenraum zwischen zwei aneinander angrenzenden Verstärkungsfäden (Wᵢ, Wⱼ) gebildet wird,
- die die zweite Einrichtung (22) tragende Schiene so ausgerichtet wird, dass die Richtung (tt') der Schiene (22) einen Winkel mit der Längsrichtung (XX') der Vorrichtung entsprechend dem reellen Winkel (a+da) der Fäden bezüglich der Längsrichtung der Lage bildet,
- ein Lagenabschnitt mit Hilfe des Schneidrädchens (250) der zweiten Einrichtung (25) abgeschnitten wird.

14. Verfahren nach Anspruch 13, wobei die Lage (N) mit Hilfe der zweiten Einrichtung (25) im Bereich der Rille (S) geschnitten wird, die als Führung für das Messrädchen (230, 240) gedient hat, um die Bewertung der Winkelabweichung (da) mit Hilfe der ersten Einrichtung (23, 24) auszuführen.

15. Verfahren nach Anspruch 13, wobei die Lage (N) mit Hilfe der zweiten Einrichtung (25) hinter, in Richtung des Abwickelns der Lage, der Rille (S) geschnitten wird, die dazu gedient hat, die Messung der Winkelabweichung (da) mit Hilfe der ersten Einrichtung (23, 24) auszuführen.

## Claims

1. Cutting device (2) for cutting a reinforcing ply (N) formed of a set of portions of thread, of given length, coated in a rubber compound, laid parallel to one another and making a given theoretical angle (a) with the longitudinal direction of the ply, **characterized in that** it comprises
- a first means (23, 24) able, without proceeding to cut the said ply (N), to estimate the actual angle (a+da) of the threads with the longitudinal direction (XX') of the device, comprising a measurement wheel (230, 240), mounted on a mobile support (21) running on a straight (22) rail (22), of which the direction (tt') is orientable to a given angle with the longitudinal direction (XX') of the device (2), and able to follow the groove (S) formed by the space between two mutually juxtaposed reinforcing threads (Wᵢ, Wⱼ) when the support (21) moves along the said rail (22), and of which the axle (231), oriented substantially in a direction (rr') perpendicular to a plane formed by the direction (tt') of the rail (22) and by the direction (ZZ') perpendicular to the plane of the ply (N), is free to move in the said direction (rr'), and
- a second means (25) able to cut the ply (N) at the actual angle (a+da) estimated by the first means (23, 24).

2. Device according to Claim 1, in which the first means (23, 24) comprises application means (234, 244) able, when the device is in operation, to apply the said measurement wheel (230, 240) to the surface of the said ply (N) with a first application force (F₁).

3. Device according to Claim 1 or 2, in which the first means also comprises:
- assessing means for assessing the distance covered by the support 21 of the said wheel along the rail (22),
- assessment means (237, 238) for assessing the movement of the said wheel in the direction parallel to the direction (rr'),
- calculation means able to determine the mean actual angle (a+da) of the threads with the longitudinal direction (XX').

4. Device according to Claim 2 or 3, in which the application means (234, 254) are able to apply a first application force F₁ of between 1 daN and 5 daN to apply the measurement wheel (230, 250) to the ply.

5. Device according to one of Claims 1 to 4, in which the axle (231) of the measurement wheel (230) is connected to the mobile support (21) via a rigid frame (232) able to move freely in a direction parallel to the direction (rr') of the axle (231) of the measurement wheel (230).

6. Device according to one of Claims 1 to 4, in which the axle (241) of the measurement wheel (240) is connected to the support (21) via an articulated frame comprising two link rods (242a and 242b) each connected, by articulations (247a, 247b, 248a, 248b), on the one hand to the two ends of an axle (246) secured to the support (21, 247), of which axle the direction (ss') is parallel to the direction (rr') of the axle (241) of the measurement wheel, and on the other hand to the two ends of the axle (241) of the measurement wheel (240).

7. Device according to Claim 6, in which the two link rods (242a and 242b) are mounted with "toe-in" of angle (p) with respect to the direction (tt') of the rail (22), so that movement of the measurement wheel (240) in a direction perpendicular to the plane formed by the direction (tt') of the rail (22) and by the direction ZZ' perpendicular to the plane of the ply (N) causes the plane of the measurement wheel (240) to rotate by dt with respect to the direction (tt') of the rail (22).

8. Device according to one of Claims 1 to 7, in which the second means (25) comprises:
- a straight rail (22) orientable at a given angle with the longitudinal direction (XX') of the device,
- a cutting wheel (250), mounted on a mobile support (21) running along the rail (22), of which the axis (qq') is oriented substantially in a direction perpendicular to the plane formed by the direction (tt') of the rail (22) and by the direction (ZZ') perpendicular to the plane of the ply (N), and able to cut through the bridge of rubber separating two mutually juxtaposed portions of thread,
- application means (254) able, when the device is in operation, to apply the said cutting wheel (250) to the surface of the said ply (N) with a second application force (F₂).

9. Device according to Claim 8, in which the axle (251) of the cutting wheel (250) is also free to move in the direction (rr') perpendicular to the plane formed by the direction (tt') of the rail (22) and by the direction (ZZ') perpendicular to the plane of the ply (N).

10. Device according to Claim 8 or 9, in which application means (254) are able to apply the said cutting wheel (250) to the surface of the said ply (N) with a second application force (F₂) of between 50 daN and 90 daN.

11. Device according to one of Claims 1 to 10, in which the first means (23, 24) and the second means (25) are positioned on the same support (21) running along one and the same rail (22).

12. Device according to Claim 11, in which the measurement wheel and the cutting wheel coincide, and in which the application means are able to apply the said wheel to the surface of the ply with a first application force (F₁) and a second application force (F₂) in succession.

13. Method for cutting a reinforcing ply (N) formed of a set of portions of thread, of given length, coated in a rubber compound, laid parallel to one another and making the given angle (a) with the longitudinal direction of the ply (N), using a device according to one of Claims 11 and 12, comprising the following steps during which:
- the said ply is unrolled under the first means (23, 24),
- the rail supporting the first means (22) is oriented in such a way that the direction (tt') of the rail (22) makes an angle with the longitudinal direction (XX') of the device that corresponds to the theoretical angle (a) of the threads with respect to the longitudinal direction (XX') of the ply (N),
- the mean angular discrepancy (da) between the theoretical direction (a) of the threads and the actual direction of the threads with the longitudinal direction is determined using the first means (23, 24) by running the measurement wheel (230, 240) along a groove (S) formed by the space between two mutually juxtaposed reinforcing threads (Wᵢ, Wⱼ),
- the rail supporting the second means (22) is oriented in such a way that the direction (tt') of the rail (22) makes an angle with the longitudinal direction (XX') of the device corresponding to the actual angle (a+da) of the threads with respect to the longitudinal direction of the ply,
- a portion of ply is cut using the cutting wheel (250) of the second means (25).

14. Method according to Claim 13, in which the ply (N) is cut using the second means (25) along the groove (S) used to guide the measurement wheel (230, 240) when evaluating the angular discrepancy (da) using the first means (23, 24).

15. Method according to Claim 13, in which the ply (N) is cut using the second means (25) downstream, in the direction in which the ply is unrolled, of the groove (S) that was used to measure the angular discrepancy (da) using the first means (23, 24).
